(19) Europäisches Patentamt
European Patent Office
Office européen des brevets

(11) **EP 4 645 185 A1**

(12) **EUROPEAN PATENT APPLICATION**
published in accordance with Art. 153(4) EPC

(43) Date of publication:
05.11.2025 Bulletin 2025/45

(51) International Patent Classification (IPC):
*G06Q 10/083* (2024.01)

(21) Application number: 23909717.3

(22) Date of filing: 10.11.2023

(52) Cooperative Patent Classification (CPC):
G06F 16/9035; G06F 18/22; G06Q 10/083;
G06V 10/74; G06V 10/764; G06V 10/82;
Y02P 90/30

(86) International application number:
PCT/CN2023/131039

(87) International publication number:
WO 2024/139785 (04.07.2024 Gazette 2024/27)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 28.12.2022 CN 202211701066

(71) Applicant: SF Technology Co., Ltd.
Shenzhen, Guangdong 518000 (CN)

(72) Inventor: ZHAO, Jianfei
Shenzhen, Guangdong 518000 (CN)

(74) Representative: Murgitroyd & Company
165-169 Scotland Street
Glasgow G5 8PL (GB)

(54) **METHOD AND APPARATUS FOR ACQUIRING WAYBILL INFORMATION OF CARGO WITHOUT WAYBILL, ELECTRONIC DEVICE, AND STORAGE MEDIUM**

(57) The present application provides a method and apparatus for acquiring waybill information of a cargo without a waybill, an electronic device, and a storage medium. The method comprises: when there is a cargo without a waybill in a current node, first obtaining an image and weight information of the cargo without a waybill; calling models to obtain a feature group of the image; then obtaining feature groups and weight information of initial candidate cargos in an upstream node from a pre-built feature library and weight library, respectively, and respectively obtaining a plurality of first candidate cargos and a plurality of second candidate cargos by means of feature matching and weight matching, so that the range of candidate cargos in the upstream node that may be the same object as the cargo without a waybill can be more accurately and quickly narrowed from two dimensions respectively; and finally, further screening for a plurality of target candidate cargos by means of matching results of the first candidate cargos and matching results of the second candidate cargos. The range can be quickly narrowed, and accurate positioning of target candidate cargos can also be implemented; therefore, in the present application, the difficulty in acquiring waybill information of a cargo without a waybill is effectively reduced, and the accuracy and efficiency are remarkably improved.

FIG. 2

## Description

## TECHNICAL FIELD

The present application relates to the technical field of logistics, and in particular, to a method and apparatus for acquiring shipping label information of a parcel with missing shipping label, an electronic device, and a storage medium.

## BACKGROUND

During transportation of cargoes, detachment of a shipping label due to various reasons makes a parcel be a parcel with missing shipping label, so that normal routing operations cannot be performed. When such exceptions occurs, a manager in charge of abnormal parcels in a Sorting & Distribution Center needs to report and search information of the parcel with missing shipping label. However, this process typically requires cross-facility coordination, resulting in protracted resolution times, operational complexity, and low efficiency. These failures create significant risks for customers, including shipment delays, losses, and subsequent complaints, potentially escalating to costly compensation claims.

Therefore, a current method for retrieving shipping label information of a parcel with missing shipping label presents notably high operational difficulty and suboptimal efficiency, which needs to be improved.

## SUMMARY

Embodiments of the present application provide a method and an apparatus for acquiring shipping label information of a parcel with missing shipping label, an electronic device and a storage medium, to solve a technical problem of great retrieving difficulty and low efficiency in a current method for retrieving shipping label information of a parcel with missing shipping label.

In a first aspect, embodiments of the present application provide a method for acquiring shipping label information of a parcel with missing shipping label, including: acquiring a current picture and current weight information of the parcel with missing shipping label in a current node; calling a deep learning model to process the current picture to obtain a current depth feature of the parcel with missing shipping label, and calling a classification model to process the current picture to obtain a current packaging material classification feature of the parcel with missing shipping label, and obtaining, based on the current depth feature and the current packaging material classification feature, a current feature set of the parcel with missing shipping label; acquiring, from a feature library, a candidate feature set for each of a plurality of initial candidate parcels in an upstream node, matching the current feature set with each candidate feature set to obtain a first matching result, and determining, based on the first matching result and a first selection condition, a plurality of first candidate parcels from the plurality of initial candidate parcels; acquiring, from a weight library, candidate weight information for each of the plurality of initial candidate parcels in the upstream node, matching the current weight information with each candidate weight information to obtain a second matching result, and determining, based on the second matching result and a second selection condition, a plurality of second candidate parcels from the plurality of initial candidate parcels; determining, based on the first matching result corresponding to each of the plurality of first candidate parcels, the second matching result corresponding to each of the plurality of second candidate parcels and a third selection condition, a plurality of target candidate parcels from the plurality of first candidate parcels and the plurality of second candidate parcels; and acquiring, based on the plurality of target candidate parcels, target shipping label information of the parcel with missing shipping label.

In a second aspect, the embodiments of the present application further provide an apparatus for acquiring shipping label information of a parcel with missing shipping label, including: a first acquisition module, configured to acquire a current picture and current weight information of the parcel with missing shipping label in a current node; a calling module, configured to call a deep learning model to process the current picture to obtain a current depth feature of the parcel with missing shipping label, and call a classification model to process the current picture to obtain a current packaging material classification feature of the parcel with missing shipping label, and obtain, based on the current depth feature and the current packaging material classification feature, a current feature set of the parcel with missing shipping label; a first matching module, configured to acquire, from a feature library, a candidate feature set for each of a plurality of initial candidate parcels in an upstream node, match the current feature set with each candidate feature set to obtain a first matching result, and determine, based on the first matching result and a first selection condition, a plurality of first candidate parcels from the plurality of initial candidate parcels; a second matching module, configured to acquire, from a weight library, candidate weight information for each of the plurality of initial candidate parcels in the upstream node, match the current weight information with each candidate weight information to obtain a second matching result, and determine, based on the second matching result and a second selection condition, a plurality of second candidate parcels from the plurality of initial candidate parcels; a determining module, configured to determine, based on the first matching result corresponding to each of the plurality of first candidate parcels, the second matching result corresponding to each of the plurality of second candidate parcels and a third selection condition, a plurality of target candidate parcels from the plurality of first candidate parcels and the plurality of second candidate parcels; and a second acquisition module, configured to acquire, based on the plurality of target candidate parcels, target shipping label information of the parcel with missing shipping label.

In a third aspect, the embodiments of the present application further provide an electronic device, including a memory and a processor, where the memory stores an application program, and the processor is configured to run the application program in the memory to execute the steps in any of the above-mentioned methods for acquiring the shipping label information of the parcel with missing shipping label.

In a fourth aspect, the embodiments of the present application provide a computer-readable storage medium, where multiple instructions are stored in the computer-readable storage medium, and the instructions are suitable for being loaded by a processor to perform the steps in the above-mentioned method for acquiring the shipping label information of the parcel with missing shipping label.

The present application provides a method and apparatus for acquiring shipping label information of a parcel with missing shipping label, an electronic device, and a storage medium. The method includes: when there is a parcel with missing shipping label in a current node, acquiring a current picture and current weight information of the parcel with missing shipping label firstly, and calling models to obtain a feature set of the picture, then acquiring a feature set and weight information of each initial candidate parcel in an upstream node from a pre-built feature library and a pre-built weight library respectively, and acquiring a plurality of first candidate parcels and a plurality of second candidate parcels respectively by feature matching and weight matching respectively. A range of candidate parcels which may contain the same object as the parcel with missing shipping label in the upstream node is narrowed accurately and quickly from two dimensions. Finally, a plurality of target candidate parcels are further screened based on a matching result of the candidate parcels and the parcel with missing shipping label, so that the range is narrowed quickly and accurate positioning of the target candidate parcels is realized. Subsequently, the shipping label information of these target candidate parcels can be used to search for shipping label information without individual items. Therefore, the difficulty of obtaining shipping label information of the parcel with missing shipping label. Thus, in the application, difficulty of acquiring the shipping label information of the parcel with missing shipping label is effectively reduced, and accuracy and efficiency are significantly improved.

## BRIEF DESCRIPTION OF THE DRAWINGS

The technical solutions and other beneficial effects of the present application will be obvious by describing specific embodiments of the present application in detail below with reference to accompanying drawings.

FIG. 1 is a schematic diagram showing a scene of a method for acquiring shipping label information of a parcel with missing shipping label provided by an embodiment of the present application.

FIG. 2 is a flowchart of a method for acquiring the shipping label information of the parcel with missing shipping label provided by an embodiment of the present application.

FIG. 3 is a schematic diagram of a feature matching process according to an embodiment of the present application.

FIG. 4 is a schematic diagram of a screening process of target candidate parcels according to an embodiment of the present application.

FIG. 5 is a schematic structural diagram of an apparatus for acquiring shipping label information of a parcel with missing shipping label provided by an embodiment of the present application.

FIG. 6 is a schematic structural diagram of an electronic device provided by one embodiment of the present application.

## DETAILED DESCRIPTION OF THE EMBODIMENTS

Embodiments of the present application provide a method and an apparatus for acquiring shipping label information of a parcel with missing shipping label, an electronic device and a computer-readable storage medium, where the apparatus for acquiring the acquiring shipping label information of the parcel with missing shipping label may be integrated in the electronic device, and the electronic device may be a server, a terminal, or other device.

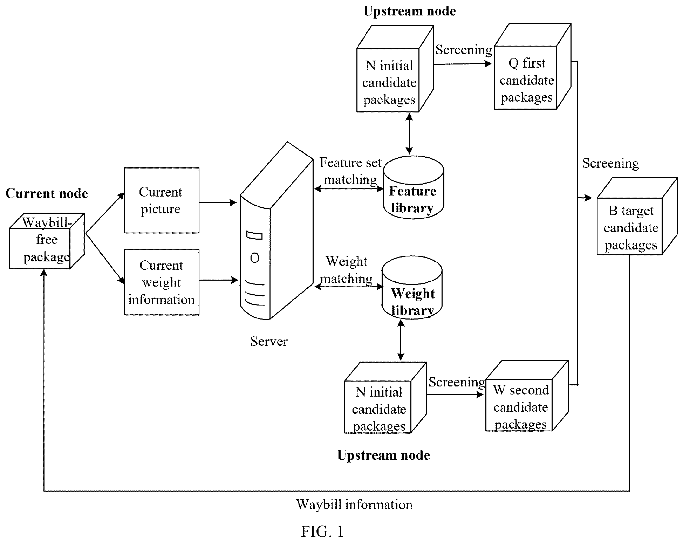

Referring to FIG. 1, FIG. 1 is a schematic diagram showing an application scene of a method for acquiring the shipping label information of the parcel with missing shipping label provided by an embodiments of the present application. The scene may include a current node, an upstream node, a server, a feature library, a weight library, and the like. A deep learning model and a classification model are arranged in the server. The server may be a cloud server, and may also be called by any device.

Specifically, when there is a parcel with missing shipping label in a current node of a logistics transportation system, a user obtains a current picture and current weight information of the parcel with missing shipping label first, and then inputs the current picture and the current weight information to the server. After acquiring the current picture and the current weight information, the server calls a deep learning model to process the current picture to obtain a current depth feature of the parcel with missing shipping label, and then calls a classification model to process the current picture to obtain a current packaging material classification feature of the parcel with missing shipping label, and obtain, based on the current depth feature and the current packaging material classification feature, a current feature set of the parcel with missing shipping label. The server acquires, from a pre-built feature library, candidate feature sets of N initial candidate parcels in an upstream node, matches the current feature set with the candidate feature set of each initial candidate parcel to obtain a first matching result, and determines, based on the first matching result and a first selection condition, Q first candidate parcels from all the initial candidate parcels. Meanwhile, the server acquires, from a pre-built weight library, candidate weight information of N initial candidate parcel in the upstream node, matches the current weight information with each candidate weight information to obtain a second matching result, and determines, based on the second matching result and a second selection condition, W second candidate parcels from all the initial candidate parcels. Finally, the server screens and determines, based on the first matching result corresponding to each first candidate, the second matching result corresponding to each second candidate and a third selection condition, B target candidate parcels from the Q first candidate parcels and the W second candidate parcels, and returns the shipping label information of target candidate parcels to the user. The user may manually screen target candidate parcels, determine the unique target candidate parcel which is the same object as the parcel with missing shipping label, and obtain the shipping label information of the parcel with missing shipping label according to the shipping label information of the unique target candidate parcel, so that the parcel with missing shipping label may be transported continuously.

It should be noted that the schematic diagram for the system scene shown in FIG. 1 is only an example, and the server and the scene described in the embodiments of the present application are only for the purpose of more clearly explaining the technical solutions of the present application and do not constitute a limitation to the technical solutions provided by the present application. Those of ordinary skills in the art may know that with the evolution of the system and the emergence of new business scenes, the technical solutions provided by the embodiments of the present application are also applicable to similar technical problems. The details will be described respectively below. It should be noted that the description order of the following embodiments is not taken as a limitation to the preferred order of the embodiments.

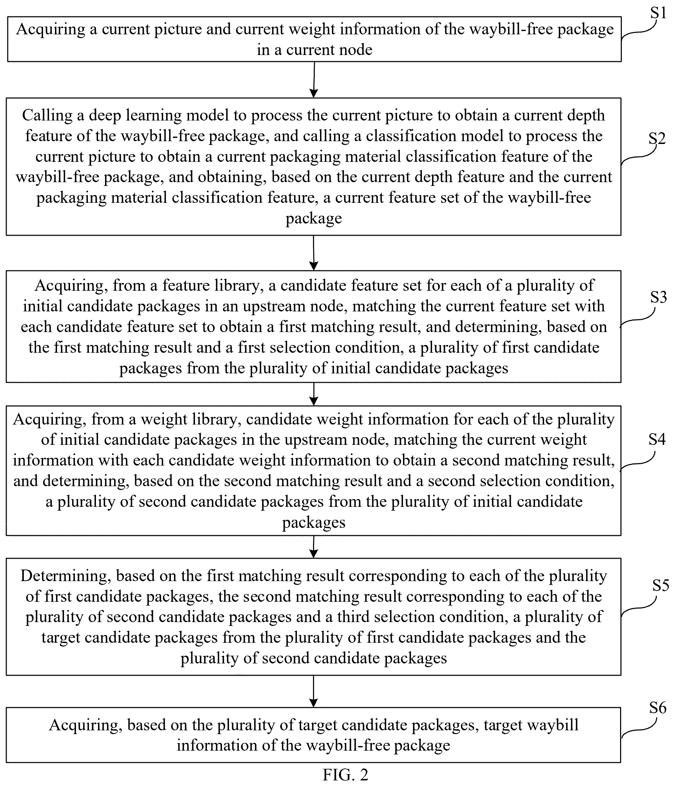

Referring to FIG. 2, FIG. 2 is a schematic diagram showing a flowchart of a method for acquiring the shipping label information of the parcel with missing shipping label provided by an embodiment of the present application. The method may be executed by a computer device (for example, a server). The method specifically includes the following steps.

S1: acquiring a current picture and current weight information of a parcel with missing shipping label in a current node.

In a logistics system, a parcel will be transported to a plurality of nodes in turn according to a mailing address and a receiving address in a shipping label during a whole transportation process from affixing the shipping label to successful delivery. The nodes may include regional processing center, regional transit department, urban transit department, urban e-commerce business department, community post station, and the like. For example, in a transportation link, the parcel is sent from "xx regional transit department" to "xx urban transit department". When the current node is the "xx urban transit department", the "xx regional transit department" is an upstream node of the node.

It should be noted that the current node and the upstream node may have a one-to-one relationship or a one-to-many relationship, which is determined based on a preset transportation rule in the logistics system. When the parcel received in a specific current node will only be sent from a fixed node, the current node corresponds to the unique upstream node, while when the parcel received in the current node may be sent from any one of two or more nodes, these nodes are all regarded as the upstream node of the current node.

For each parcel, the parcel carries the same shipping label at any time in a transportation link. Various shipping label information such as sender information, receiver information, shipping label number, freight attribute information, remarks, and the like, may be recorded in the shipping label. After receiving the parcel, each node will determine a next transportation action of the parcel according to the shipping label information. In the embodiments of the present application, the parcel with missing shipping label refers to a parcel with lost shipping label or incomplete key information of shipping label. After the freight is packed, the shipping label is usually fixed on an outer packaging of the freight and then transported as a parcel. If the shipping label falls off or is damaged during transportation, the parcel will become a parcel with missing shipping label. Due to the lack of key information such as shipping label number, the parcel with missing shipping label cannot be transported forward. Therefore, it is necessary to find a relevant record of the parcel with missing shipping label from an upstream node, so that the shipping label information of the parcel may be obtained from a corresponding record, and then the parcel may be transported as a normal parcel.

In the embodiments of the present application, all parcels with records in the upstream node are called historical parcels. Due to a huge number of historical parcels processed in the upstream node, how to quickly and accurately screen out which historical parcel is the same parcel as the parcel with missing shipping label is a technical problem to be solved in the present application.

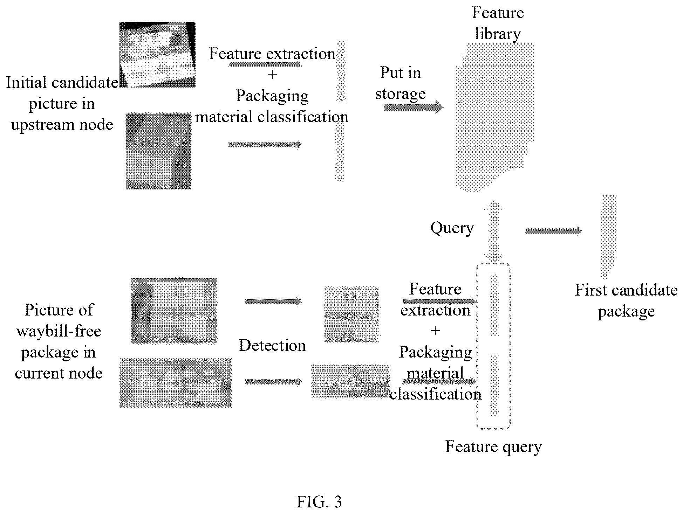

In this step, as shown in FIG. 3, firstly, a current picture and a current weight information of a parcel with missing shipping label in the current node are acquired, and the current picture is a grayscale picture taken by an industrial camera. For a parcel with missing shipping label, only one current picture may be taken, or a plurality of current pictures may be taken from different angles. The current weight information of the parcel with missing shipping label may be obtained by weighing the parcel with missing shipping label with a weighing tool.

S2: calling a deep learning model to process the current picture to obtain a current depth feature of the parcel with missing shipping label, and calling a classification model to process the current picture to obtain a current packaging material classification feature of the parcel with missing shipping label, and obtaining, based on the current depth feature and the current packaging material classification feature, a current feature set of the parcel with missing shipping label.

As shown in FIG. 3, each current picture is input into the deep learning model to extract the depth feature to obtain the current depth feature of the parcel with missing shipping label. The deep learning model includes a convnext network and a global pooling layer. During the processing of the current picture, the current picture is first processed into a specific size. For example, a size of an original current picture is h*w, the original current picture may be converted into a picture with a size of 224*224 by a bilinear difference algorithm, and then input into the convnext network for feature extraction. Finally, 768-dimensional high-dimensional features are output through the global pooling layer, and these features are the current depth feature of the parcel with missing shipping label.

When each current picture is input into the classification model, packaging material classification features of the parcel with missing shipping label are extracted to obtain the current packaging material classification feature of the parcel with missing shipping label. The packaging material refers to a packaging material of freight, which is usually divided into five categories including paper carton, file packet, woven bag, foam box and plastic bag, and different categories correspond to different classification features. The classification model may be a MobileNetV2 model, which classifies the packaging material of the parcel with missing shipping label in the current picture, and converts a classification result into five-dimensional features consisting of 0 and 1 for output, and these technical features are the current packaging material classification feature of the parcel with missing shipping label.

The 768-dimensional current depth features and the 5-dimensional current packaging material classification features are combined to obtain the current feature set of the parcel with missing shipping label.

In an embodiment, as shown in FIG. 3, before calling the deep learning model and the classification model to process the current picture, the current picture may be pre-processed to remove an irrelevant background except the parcel, so as to extract the feature more accurately. Therefore, the parcel with missing shipping label in each current picture may be detected on the basis of a trained image detection model, such as yolov5. Specifically, four corner coordinates of the parcel with missing shipping label may be detected, and then only picture contents within the four corner coordinates are kept and other picture contents are removed. Feature extraction may be performed after a picture of a single parcel with missing shipping label is acquired.

In an embodiment, before step S1, the method further includes: acquiring a historical picture and historical weight information for each of a plurality of historical parcels in all nodes; calling the deep learning model to process each historical picture to obtain a historical depth feature of each of the plurality of historical parcels, and calling the classification model to process each historical picture to obtain a historical packaging material classification feature of each of the plurality of historical parcels, and obtaining, based on the historical depth feature and the historical packaging material classification feature of each of the plurality of historical parcels, a historical feature set of each of the plurality of historical parcels; and storing each historical feature set into the feature library, and storing each historical weight information into the weight library.

In the embodiments of the present application, a parcel which may be the same object as the parcel with missing shipping label is screened from the upstream node by feature matching and weight matching. The current feature set obtained in this step is used for participating in the feature matching and the current weight information is used for participating in the weight matching. Therefore, as shown in FIG. 3, for the historical parcels processed in all nodes (including the upstream node and other nodes), the historical picture and the historical weight information of each historical parcel are acquired first based on the same processing method in step S1, and then the historical depth feature and the historical packaging material classification feature of each historical parcel are obtained based on the same processing method in step S2. The historical depth feature and the historical packaging material classification are combined to obtain the historical feature set. Finally, each historical feature set is stored in the feature library to participate in the subsequent feature matching, while each historical weight information is stored in the weight library to participate in the subsequent weight matching.

It should be noted that the feature library and the weight library in the present application may be distributed in the same storage medium, or distributed in different storage media. The feature library and the weight library are only used to represent storage of two different types of data, but do not limit separate or common storage methods.

Because the current node may be any node in the logistics system, and the corresponding upstream node thereof is not fixed. However, the number of the historical parcels in the upstream node is very large, so that it will take a long time to acquire pictures and calculate feature extraction every time when feature matching is needed. If the same situation is encountered next time, the features need to be extracted again, which will waste computing resources. Therefore, in the present application, for any parcel, after the parcel arrives at a new node, a historical feature set and historical weight information corresponding to the parcel are calculated, and then each historical feature set is stored in the pre-created feature library and each historical weight information is stored in the weight library. In the subsequent feature matching, the corresponding historical feature set may be directly obtained from the feature library to participate in the matching, thus improving matching efficiency and saving computational power.

In an embodiment, the step of storing each historical feature set into the feature library, includes: acquiring a historical shipping label number for each of the plurality of historical parcels, and establishing a correspondence table between each historical shipping label number and each historical feature set; and storing each historical feature set and the correspondence table into the feature library. Since each historical parcel has a unique shipping label number, the correspondence table between each historical shipping label number and each historical feature set may be established and maintained. The historical feature set may be searched to participate in the calculation based on the correspondence table in subsequent steps, and the historical shipping label number corresponding to each historical feature set may be returned to a client.

S3: acquiring, from a feature library, a candidate feature set for each of a plurality of initial candidate parcels in an upstream node, matching the current feature set with each candidate feature set to obtain a first matching result, and determining, based on the first matching result and a first selection condition, a plurality of first candidate parcels from the plurality of initial candidate parcels.

Because the parcel has a specific transportation time limit, for a specific parcel with missing shipping label, it is not necessary to take out historical feature sets of all historical parcels in the upstream node to participate in the feature matching. Only candidate feature sets of the initial candidate parcels in a specific time period may be used for matching. The specific time period may be determined based on a parcel transportation time between the current node and the upstream node and a parcel processing time of the upstream node. For example, the parcel processing time is usually half a day for a specific upstream node from receiving a parcel to sending the parcel to next node. The parcel transportation time is usually half a day from the parcel being sent out by the upstream node to the parcel being received in the current node. Therefore, all historical parcels received by the upstream node in the previous day or two days from the moment may be taken as the initial candidate parcels, and the historical feature sets corresponding to the initial candidate parcels may be taken as the candidate feature sets.

As shown in FIG. 3, the candidate feature set of each initial candidate parcel in the upstream node is directly queried from the feature library, and the current feature set is matched with the candidate feature set of each initial candidate parcel to obtain the first matching result, which is used to characterize similarity between every two feature sets. If two parcels are the same parcel of different nodes, the similarity between the two corresponding feature sets will be higher; otherwise, the similarity will be lower. The first selection condition is configured to characterize under what condition the first candidate parcel is selected from all the initial candidate parcels and how many first candidate parcels are selected. For example, top 50 candidate parcels may be selected as the first candidate parcels based on descending order of the feature similarity. Assuming that there are 5,000 initial candidate parcels, a range of the first candidate parcels may be quickly reduced to 50 by this way, and these first candidate parcels are obtained based on feature matching, so that positioning accuracy is high.

In an embodiment, S3 specifically includes: matching the current feature set with N candidate feature sets to obtain N feature similarities, where N is a positive integer; obtaining, based on each feature similarity, a first feature quantization value for each of the plurality of initial candidate parcels; and selecting, based on descending order of N first feature quantization values, top Q initial candidate parcels as the plurality of first candidate parcels, where Q is a positive integer.

Assuming that there are N initial candidate parcels, when only one current picture of the parcel with missing shipping label is taken, for the current feature set and the N candidate feature sets, N feature similarities are calculated first, which may be specifically measured by a cosine distance between features. When the cosine distance is small, the feature similarity is high. Each feature similarity is quantified to obtain the first feature quantization value, that is, a feature fraction. The cosine distance is denoted by s and the first characteristic quantization value is denoted by x, then the two satisfy the following equation:

$$x = 1 - s \text{ (equation 1).}$$

The smaller the cosine distance s is, the larger the first feature quantization value x is. The N first feature quantization values are sorted in descending order, and initial candidate parcels corresponding to top Q first feature quantization values are taken as the first candidate parcels. A value of Q may be set as required, such as 50 or other values.

In an embodiment, the parcel with missing shipping label includes M current pictures with different angles, and each current picture corresponds to a current feature set. S3 specifically includes: respectively matching each current feature set with N candidate feature sets to obtain M feature similarity sets, where each feature similarity set includes N feature similarities, N is a positive integer, and M is an integer greater than 1; obtaining, based on N feature similarities in each feature similarity set, second feature quantization values of N initial candidate parcels corresponding to each current picture; selecting, for N initial candidate parcels corresponding to each current picture, top P initial candidate parcels as third candidate parcels based on descending order of N second feature quantization values, where P is a positive integer; obtaining, based on M second feature quantization values of each third candidate parcel and M current pictures, a first feature quantization value of each third candidate parcel; and selecting top Q third candidate parcels as the plurality of first candidate parcels based on descending order of M*P first feature quantization values, where Q is a positive integer.

When M current pictures with different angles of the parcel with missing shipping label are provided, and each current picture corresponds to a current feature set, the current feature set of each current picture is calculated once with N candidate feature sets respectively to obtain N feature similarities. Then the N feature similarities are quantified to obtain N second feature quantization values. Likely, the feature similarity may be measured by cosine distance. The cosine distance is denoted by s and the second characteristic quantization value is denoted by x', then the two satisfy the following equation:

$$x' = 1 - s \text{ (equation 2)}.$$

The smaller the cosine distance s is, the larger the second feature quantization value x' is. M current pictures are subjected to the above calculating process to obtain M feature similarity sets, and each feature similarity set includes N feature similarities and corresponding N second feature quantization values x'. Then, for each feature similarity set, the feature similarities are sorted based on descending order of N second feature quantization values x', and top P initial candidate parcel are selected as the third candidate parcels. A value of P may be set as required, such as 50 or other values. Through the above operations, a total of M*P third candidate parcels are obtained.

In the above calculation process, for each initial candidate parcel, the second feature quantization values x' of the initial candidate parcel with M current pictures are calculated. For each third candidate parcel, each is provided with M second feature quantization values x', and the largest two of the M second feature quantization values x' are taken and an average value of the two is calculated and taken as the first feature quantization value x of each third candidate parcel. If the largest two of the M second feature quantization values x' are $x_{max1}'$ and $x_{max2}'$ respectively, then the first feature quantization value x satisfies the following equation:

$$x = (x_{max1}' + x_{max2}')/2 \text{ (equation 3)}.$$

M*P first feature quantization values x are obtained for the M*P third candidate parcels. Finally, the M*P first feature quantization values are sorted in descending order, and third candidate parcels corresponding to the top Q first feature quantization values are taken as the first candidate parcels. A value of Q may be set as required, such as 50 or other values.

In this embodiment, a plurality of current pictures from different angles are taken for the parcel with missing shipping label to participate in feature extraction and feature matching. Because the data participating in calculation and matching are more comprehensive, accuracy of screening may be further improved compared with taking only one image.

S4: acquiring, from a weight library, candidate weight information for each of the plurality of initial candidate parcels in the upstream node, matching the current weight information with each candidate weight information to obtain a second matching result, and determining, based on the second matching result and a second selection condition, a plurality of second candidate parcels from the plurality of initial candidate parcels.

The candidate weight information of each initial candidate parcel in the upstream node is directly queried from the weight library, and the current weight information is matched with each candidate weight information to obtain the second matching result, which is used to characterize a difference between every two weights. If two parcels are the same parcel of different nodes, the difference between the two corresponding weights will be smaller; otherwise, the difference will be larger. The second selection condition is configured to characterize under what condition the second candidate parcel is selected from all the initial candidate parcels and how many second candidate parcels are selected. For example, top 50 candidate parcels are selected as the second candidate parcels based on descending order of the weight difference. Assuming that there are 5,000 initial candidate parcels, a range of the second candidate parcels may be quickly reduced to 50 by this way, and these second candidate parcels are obtained based on weight matching, so that positioning accuracy is high.

In an embodiment, S4 specifically includes: matching the current weight information with N candidate weight information to obtain N weight difference degrees, wherein N is a positive integer; obtaining, based on each weight difference degree, a weight quantization value of each of the plurality of initial candidate parcels; and selecting top W initial candidate parcels as the plurality of second candidate parcels based on descending order of N weight quantization values, where W is a positive integer.

Assuming that there are N initial candidate parcels, N weight differences may be obtained by matching the current weight information with N candidate weight information, and each weight difference is quantified to obtain a weight quantization value, that is, a weight fraction. During quantization, if the current weight of the parcel with missing shipping label is $w_0$, a candidate weight of the initial candidate parcel be $w_1$, a maximum difference between all the candidate weights and the current weight is $w_{max}$, and a weight quantization value of the initial candidate parcel is Y, then the following equation is satisfied:

$$y = 1 - |w_0 - w_1|/w_{max} \text{ (equation 4)}.$$

Since $w_{max}$ is the maximum value of the difference between all the candidate weights and the current weight, an absolute value range of the difference between $w_0$ and $w_1$ must be between 0 and $w_{max}$. Therefore, a value range of the weight quantization value y may be mapped to a range between 0 and 1 through the above equation. For the weight quantization value y, the closer it is to 1, the smaller the weight difference between the parcel with missing shipping label and the initial candidate parcel is, and the closer it is to 0, the greater the weight difference between the two is. If the candidate weight information of a specific initial candidate parcel does not exist in the weight library, a weight quantization value thereof is directly taken as 0.5. In addition, it is possible that a difference between a specific candidate weight and the current weight is much larger than other differences, so an upper limit may be set in advance for a value of $w_{max}$, or after all the differences are obtained, the highest one or several differences are removed first, and then a maximum value is taken as $w_{max}$ from the remaining differences.

S5: determining, based on the first matching result corresponding to each of the plurality of first candidate parcels, the second matching result corresponding to each of the plurality of second candidate parcels and a third selection condition, a plurality of target candidate parcels from the plurality of first candidate parcels and the plurality of second candidate parcels.

The first matching result is configured to measure possibility that each first candidate parcel is the same object as the parcel with missing shipping label from a depth feature dimension of the picture, and the second matching result is configured to measure possibility that each second candidate parcel is the same object as the parcel with missing shipping label from a weight dimension of the freight, so the two may be integrated to together determine the possibility that each candidate parcel is the same object as the parcel with missing shipping label from the two dimensions. The third selection condition is used to characterize how to integrate and how many target candidate parcels are selected after integrating. The plurality of target candidate parcels finally selected based on the third selection condition have the greatest comprehensive possibility of being the same object as the parcel with missing shipping label.

In an embodiment, S5 specifically includes: selecting top S first candidate parcels as first target candidate parcels based on descending order of Q first feature quantization values for Q first candidate parcels, and determining top T second candidate parcels as second target candidate parcels based on descending order of W weight quantization values for W second candidate parcels, and determining remaining first candidate parcels and remaining second candidate parcels as remaining candidate parcels, where S and T are positive integers; combining S first target candidate parcels and T second target candidate parcels, and performing deduplication to a combination of S first target candidate parcels and T second target candidate parcels to obtain A third target candidate parcels, where A is a positive integer; obtaining, based on a first feature quantization value and a weight quantization value of each remaining candidate parcel, a total matched quantization value of each remaining candidate parcel; selecting top B-A remaining candidate parcels as fourth target candidate parcels based on descending order of total matched quantization values of the remaining candidate parcels, where B is an integer; and combining the A third target candidate parcels and the B-A fourth target candidate parcels to obtain B target candidate parcels.

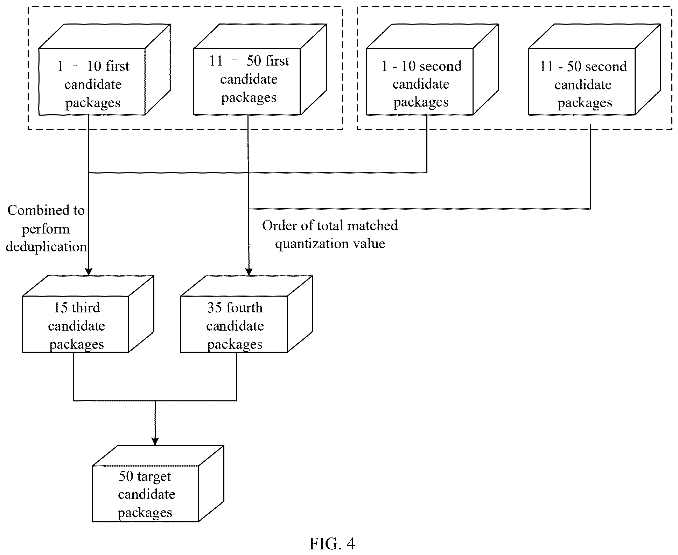

As shown in FIG. 4, if the values of Q and W in the above embodiment are both 50, and the target candidate parcels B that need to be finally obtained is also 50, top 10 first candidate parcel may be selected and determined as the first target candidate parcels first based on descending order of 50 first feature quantization values x of 50 first candidate parcel, and based on descending order of 50 second feature quantization values y of 50 second candidate parcels, top 10 second candidate parcels are selected and determined as the second target candidate parcels. Then, the 10 first target candidate parcels and the 10 second target candidate parcels are combined, and repeated candidate parcels therein are removed to obtain A third target candidate parcels, and a value of A ranges from 10 to 20, such as 15. The remaining 40 first candidate parcels in the 50 first candidate parcels and the remaining 40 second candidate parcels in the 50 second candidate parcels are all remaining candidate parcels. For each remaining candidate parcel, a total matched quantization value thereof is set to be t, a weight of the first feature quantization value x thereof is set to be $\lambda$ which ranges from 0 to 1, and a weight of the weight quantization value y thereof is set to be 1-$\lambda$, then the following equation is satisfied:

$$t = \lambda * x + (1 - \lambda) * y \text{ (equation 5)}.$$

For all the remaining candidate parcels, the corresponding total matched quantization values t thereof is calculated, and then the top B-A remaining candidate parcels are selected and determined as the fourth target candidate parcels based on descending order of all the total matched quantization values t. When A is 15, a value of B is 35. Finally, 15 third target candidate parcels and 35 fourth target candidate parcels are combined to obtain 50 target candidate parcels.

Because top candidate parcels in each dimension are very likely to be the same object as the parcel with missing shipping label, these candidate parcels may be directly determined as the target candidate parcels. The remaining candidate parcels are weighed by integrating two quantization values. In this way, the target candidate parcels obtained by this method not only ensure higher accuracy, but also improve the calculation efficiency.

S6: acquiring, based on the plurality of target candidate parcels, target shipping label information of the parcel with missing shipping label.

The plurality of target candidate parcels obtained through separate screening and comprehensive screening in the above two dimensions have the greatest comprehensive possibility of being the same object as the parcel with missing shipping label in all the initial candidate parcels, and a quantity of the target candidate parcels after screening is small. Finally, these target candidate parcels may be manually screened to find the unique historical piece which is the same object as the parcel with missing shipping label, and the target shipping label information of the parcel with missing shipping label may be obtained from the shipping label information of the historical parcel.

As shown in the above embodiments the method for acquiring the shipping label information of the parcel with missing shipping label provided by the present application includes: when there is a parcel with missing shipping label in a current node, acquiring a current picture and current weight information of the parcel with missing shipping label firstly, and calling models to obtain a feature set of the picture, then acquiring a feature set and weight information of each initial candidate parcel in an upstream node from a pre-built feature library and a pre-built weight library respectively, and acquiring a plurality of first candidate parcels and a plurality of second candidate parcels respectively by feature matching and weight matching respectively. A range of candidate parcels which may contain the same object as the parcel with missing shipping label in the upstream node is narrowed accurately and quickly from two dimensions. Finally, a plurality of target candidate parcels are further screened based on a matching result of the candidate parcels and the parcel with missing shipping label, so that the range is narrowed quickly and accurate positioning of the target candidate parcels is realized. Subsequently, the shipping label information of these target candidate parcels can be used to search for shipping label information without individual items. Therefore, the difficulty of obtaining shipping label information of the parcel with missing shipping label. Thus, in the application, difficulty of acquiring the shipping label information of the parcel with missing shipping label is effectively reduced, and accuracy and efficiency are significantly improved.

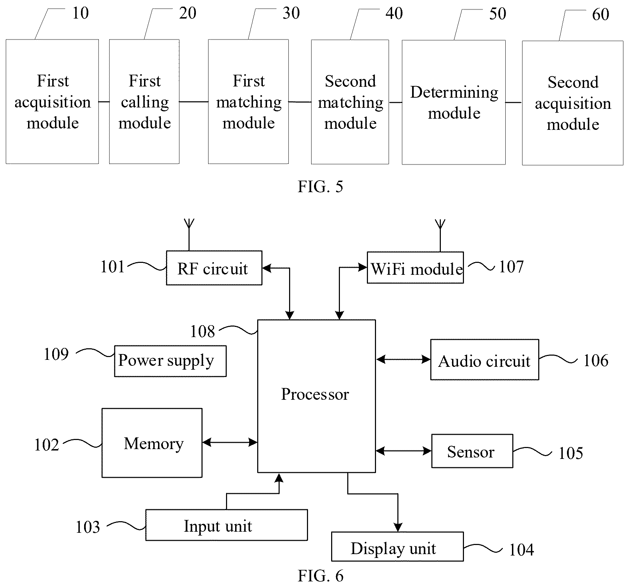

Based on the methods of the above embodiments, an embodiment will be further described from a perspective of an apparatus for acquiring shipping label information of a parcel with missing shipping label. Referring to FIG. 5, the apparatus for acquiring the acquiring shipping label information of the parcel with missing shipping label may include a first acquisition module 10, a first calling module 20, a first matching module 30, a second matching module 40, a determining module 50 and a second acquisition module 60.

The first acquisition module 10 is configured to acquire a current picture and current weight information of the parcel with missing shipping label in a current node.

The first calling module 20 is configured to call a deep learning model to process the current picture to obtain a current depth feature of the parcel with missing shipping label, and call a classification model to process the current picture to obtain a current packaging material classification feature of the parcel with missing shipping label, and obtain, based on the current depth feature and the current packaging material classification feature, a current feature set of the parcel with missing shipping label.

The first matching module 30 is configured to acquire, from a feature library, a candidate feature set for each of a plurality of initial candidate parcels in an upstream node, match the current feature set with each candidate feature set to obtain a first matching result, and determine, based on the first matching result and a first selection condition, a plurality of first candidate parcels from the plurality of initial candidate parcels.

The second matching module 40 is configured to acquire, from a weight library, candidate weight information for each of the plurality of initial candidate parcels in the upstream node, match the current weight information with each candidate weight information to obtain a second matching result, and determine, based on the second matching result and a second selection condition, a plurality of second candidate parcels from the plurality of initial candidate parcels.

The determining module 50 is configured to determine, based on the first matching result corresponding to each of the plurality of first candidate parcels, the second matching result corresponding to each of the plurality of second candidate parcels and a third selection condition, a plurality of target candidate parcels from the plurality of first candidate parcels and the plurality of second candidate parcels.

The second acquisition module 60 is configured to acquire, based on the plurality of target candidate parcels, target shipping label information of the parcel with missing shipping label.

In an embodiment, the apparatus for acquiring the acquiring shipping label information of the parcel with missing shipping label further includes a third acquisition module, a second calling module and a storage module.

The third acquisition module is configured to acquire a historical picture and historical weight information for each of a plurality of historical parcels in all nodes.

The second calling module is configured to call the deep learning model to process each historical picture to obtain a historical depth feature of each of the plurality of historical parcel, and call the classification model to process each historical picture to obtain a historical packaging material classification feature of each of the plurality of historical parcels, and obtain, based on the historical depth feature and the historical packaging material classification feature of each of the plurality of historical parcels, a historical feature set of each of the plurality of historical parcels.

The storage module is configured to store each historical feature set into the feature library, and storing each historical weight information into the weight library.

In an embodiment, the storage module includes an acquisition sub-module and a storage sub-module.

The acquisition sub-module is configured to, acquire a historical shipping label number for each of the plurality of historical parcels, and establishing a correspondence table between each historical shipping label number and each historical feature set.

The storage sub-module is configured to store each historical feature set and the correspondence table into the feature library.

In an embodiment, the first matching module 30 includes a first matching sub-module, a first obtaining sub-module and a first selecting sub-module.

The first matching sub-module is configured to match the current feature set with N candidate feature sets to obtain N feature similarities, where N is a positive integer.

The first obtaining sub-module is configured to obtain, based on each feature similarity, a first feature quantization value for each of the plurality of initial candidate parcels.

The first selecting sub-module is configured to select, based on descending order of N first feature quantization values, top Q initial candidate parcels as the plurality of first candidate parcels, where Q is a positive integer.

In an embodiment, the first matching module 30 includes a second matching sub-module, a second obtaining sub-module, a second selecting sub-module, a third obtaining sub-module and a third selecting sub-module.

The second matching sub-module is configured to respectively match each current feature set with N candidate feature sets to obtain M feature similarity sets, where each feature similarity set comprises N feature similarities, N is a positive integer, and M is an integer greater than 1.

The second obtaining sub-module is configured to obtain, based on N feature similarities in each feature similarity set, second feature quantization values of N initial candidate parcels corresponding to each current picture.

The second selecting sub-module is configured to select, for N initial candidate parcels corresponding to each current picture, top P initial candidate parcels as third candidate parcels based on descending order of N second feature quantization values, where P is a positive integer.

The third obtaining sub-module is configured to obtain, based on M second feature quantization values of each third candidate parcel and M current pictures, a first feature quantization value of each third candidate parcel.

The third selecting sub-module is configured to select top Q third candidate parcels as the plurality of first candidate parcels based on descending order of M*P first feature quantization values, wherein Q is a positive integer.

In an embodiment, the second matching module 40 includes a third matching sub-module, a fourth obtaining sub-module and a fourth selecting sub-module.

The third matching sub-module is configured to match the current weight information with N candidate weight information to obtain N weight difference degrees, where N is a positive integer.

The fourth obtaining sub-module is configured to obtain, based on each weight difference degree, a weight quantization value of each of the plurality of initial candidate parcels.

The fourth selecting sub-module is configured to select top W initial candidate parcels as the plurality of second candidate parcels based on descending order of N weight quantization values, where W is a positive integer.

In an embodiment, the determining module 50 includes a fifth selecting sub-module, a fifth obtaining sub-module, a sixth obtaining sub-module, a sixth selecting sub-module and a seventh obtaining sub-module.

The fifth selecting sub-module is configured to select top S first candidate parcels as first target candidate parcels based on descending order of Q first feature quantization values for Q first candidate parcels, and determine top T second candidate parcels as second target candidate parcels based on descending order of W weight quantization values for W second candidate parcels, and determine remaining first candidate parcels and remaining second candidate parcels as remaining candidate parcels, where S and T are positive integers.

The fifth obtaining sub-module is configured to combine S first target candidate parcels and T second target candidate parcels, and performing deduplication to a combination of S first target candidate parcels and T second target candidate parcels to obtain A third target candidate parcels, where A is a positive integer.

The sixth obtaining sub-module is configured to obtain, based on a first feature quantization value and a weight quantization value of each remaining candidate parcel, a total matched quantization value of each remaining candidate parcel.

The sixth selecting sub-module is configured to select top B remaining candidate parcels as fourth target candidate parcels based on descending order of total matched quantization values of the remaining candidate parcels, wherein B is an integer.

The seventh obtaining sub-module is configured to combine all of the third target candidate parcels and all of the fourth target candidate parcels to obtain a plurality of target candidate parcels.

Different from the prior art, in the apparatus for acquiring the shipping label information of the parcel with missing shipping label provided by the embodiments of the present application, when there is the parcel with missing shipping label in the current node, the picture and weight information of the parcel with missing shipping label are obtained firstly, and the model is called to obtain the feature set of the picture. Then the feature set and weight information of each initial candidate parcel of the upstream node are obtained from a pre-built feature library and a pre-built weight library respectively, and the plurality of first candidate parcels and the plurality of second candidate parcels are obtained respectively by feature matching and weight matching. Therefore, range of candidate parcel that may be the same object as the parcel with missing shipping label in the upstream node may be narrowed accurately and quickly from two dimensions, and finally, the plurality of target candidate parcels may be further screened by combining the matching result of the two, so that the range is narrowed quickly and accurate positioning of the target candidate parcels is realized. Subsequently, the shipping label information of these target candidate parcels can be used to search for shipping label information without individual items. Therefore, the difficulty of obtaining shipping label information of the parcel with missing shipping label. Thus, in the application, difficulty of acquiring the shipping label information of the parcel with missing shipping label is effectively reduced, and accuracy and efficiency are significantly improved.

Correspondingly, the embodiments of the present application further provide an electronic device. As shown in FIG. 6, the electronic device may include a Radio Frequency (RF) circuit 101, a memory 102 including one or more computer-readable storage media, an input unit 103, a display unit 104, a sensor 105, an audio circuit 106, a WiFi module 107, a processor 108 including one or more processing cores, a power supply 109 and other components. Those skilled in the art may understand that the electronic device structure shown in FIG. 6 does not constitute a limitation to the electronic device, and may include more or less than the illustrated components, or combine some components, or have different component arrangements.

The RF circuit 101 may be configured to receive and send signals during message sending and receiving or during a call, and specially receive and send downlink information of a base station to one or more processors 680 to process. In addition, the RF circuit sends involved uplink data to the base station. The memory 102 may be configured to store software programs and modules. The processor 108 runs the software programs and the modules stored in the memory 102 to perform various functional applications and acquire the shipping label information of the parcel with missing shipping label. The input unit 103 may be configured to receive input numeric or character information and generate keyboard, mouse, joystick, optical or trackball signal input related to client settings and function control.

The display unit 104 may be configured to display information input by or provided to the customers and various graphical client interfaces of the server. These graphical client interfaces may be composed of graphics, text, icons, videos and any combination thereof.

The electronic device may further include at least one sensor 105 such as an optical sensor, a motion sensor, and other sensors. The audio circuit 106 includes a speaker, which may provide an audio interface between the client and the electronic device.

WiFi is a short-range wireless transmission technology. The electronic device may help the client to send and receive e-mails, browse web pages, and access streaming media via the WiFi module 107 which provides wireless wideband Internet access for the customer. Although FIG. 6 shows the WiFi module 107, it may be understood that the WiFi module 107 does not belong to a necessary configuration of the electronic device and may be omitted as necessary without changing the essence of the present application.

The processor 108 is a control center of the electronic device, and uses various interfaces and lines to connect various parts of the mobile phone, runs or executes software programs and/or modules stored in the memory 102, and calls data stored in the memory 102 to execute various functions of the electronic device and process data, thus entirely monitoring the mobile phone.

The electronic device further includes the power supply 109 (such as a battery) for supplying power to various components. Preferably, the power supply may be logically connected to the processor through a power management system, thereby realizing functions of charging and discharging management, and power consumption management and the like through the power management system.

The electronic device may also include a camera, a bluetooth module, or the like, which are not shown, and will not be elaborated herein.

Specifically, in this embodiment, the processor 108 in the server will load executable files corresponding to the processes of one or more application programs into the memory 102 according to the following instructions, and the processor 108 will run the application programs stored in the memory 102, so as to realize the following functions of: acquiring a current picture and current weight information of the parcel with missing shipping label in a current node; calling a deep learning model to process the current picture to obtain a current depth feature of the parcel with missing shipping label, and calling a classification model to process the current picture to obtain a current packaging material classification feature of the parcel with missing shipping label, and obtaining, based on the current depth feature and the current packaging material classification feature, a current feature set of the parcel with missing shipping label; acquiring, from a feature library, a candidate feature set for each of a plurality of initial candidate parcels in an upstream node, matching the current feature set with each candidate feature set to obtain a first matching result, and determining, based on the first matching result and a first selection condition, a plurality of first candidate parcels from the plurality of initial candidate parcels; acquiring, from a weight library, candidate weight information for each of the plurality of initial candidate parcels in the upstream node, matching the current weight information with each candidate weight information to obtain a second matching result, and determining, based on the second matching result and a second selection condition, a plurality of second candidate parcels from the plurality of initial candidate parcels; determining, based on the first matching result corresponding to each of the plurality of first candidate parcels, the second matching result corresponding to each of the plurality of second candidate parcels and a third selection condition, a plurality of target candidate parcels from the plurality of first candidate parcels and the plurality of second candidate parcels; and acquiring, based on the plurality of target candidate parcels, target shipping label information of the parcel with missing shipping label.

In the embodiment above, the description of each embodiment has its own emphasis, and the parts that are not detailed in a specific embodiment may be referred to the above detailed description, and will not be repeated here.

It may be understood by those skilled in the art that all or part of the steps in various methods of the above embodiments may be completed by instructions or by controlling related hardware by instructions, which may be stored in a computer-readable storage medium and loaded and executed by a processor.

Therefore, the embodiments of the present application provide a computer-readable storage medium, where multiple instructions are stored in the computer-readable storage medium, and the instructions can be loaded by a processor to realize the following functions of: acquiring a current picture and current weight information of the parcel with missing shipping label in a current node; calling a deep learning model to process the current picture to obtain a current depth feature of the parcel with missing shipping label, and calling a classification model to process the current picture to obtain a current packaging material classification feature of the parcel with missing shipping label, and obtaining, based on the current depth feature and the current packaging material classification feature, a current feature set of the parcel with missing shipping label; acquiring, from a feature library, a candidate feature set for each of a plurality of initial candidate parcels in an upstream node, matching the current feature set with each candidate feature set to obtain a first matching result, and determining, based on the first matching result and a first selection condition, a plurality of first candidate parcels from the plurality of initial candidate parcels; acquiring, from a weight library, candidate weight information for each of the plurality of initial candidate parcels in the upstream node, matching the current weight information with each candidate weight information to obtain a second matching result, and determining, based on the second matching result and a second selection condition, a plurality of second candidate parcels from the plurality of initial candidate parcels; determining, based on the first matching result corresponding to each of the plurality of first candidate parcels, the second matching result corresponding to each of the plurality of second candidate parcels and a third selection condition, a plurality of target candidate parcels from the plurality of first candidate parcels and the plurality of second candidate parcels; and acquiring, based on the plurality of target candidate parcels, target shipping label information of the parcel with missing shipping label.

The method and the apparatus for acquiring shipping label information of a parcel with missing shipping label, the electronic device and the computer-readable storage medium provided by the embodiments of the present application are described in detail above. Specific examples are applied to explain the principle and implementation of the present application herein. The above embodiments are only used to help understand the technical solutions of the present application and the core idea thereof. It may be understood by those of ordinary skills in the art that the technical solutions described in the foregoing embodiments can be still modified, or some or all of the technical features can be equivalently replaced. However, these improvements or substitutions do not make the essence of the corresponding technical solutions deviate from the scope of the technical solutions of various embodiments of the present application.

**Claims**

1. A method for acquiring shipping label information of a parcel with missing shipping label, comprising:

   acquiring a current picture and current weight information of the parcel with missing shipping label in a current node;
   calling a deep learning model to process the current picture to obtain a current depth feature of the parcel with missing shipping label, and calling a classification model to process the current picture to obtain a current packaging material classification feature of the parcel with missing shipping label, and obtaining, based on the current depth feature and the current packaging material classification feature, a current feature set of the parcel with missing shipping label;

acquiring, from a feature library, a candidate feature set for each of a plurality of initial candidate parcels in an upstream node, matching the current feature set with each candidate feature set to obtain a first matching result, and determining, based on the first matching result and a first selection condition, a plurality of first candidate parcels from the plurality of initial candidate parcels;

acquiring, from a weight library, candidate weight information for each of the plurality of initial candidate parcels in the upstream node, matching the current weight information with each candidate weight information to obtain a second matching result, and determining, based on the second matching result and a second selection condition, a plurality of second candidate parcels from the plurality of initial candidate parcels;

determining, based on the first matching result corresponding to each of the plurality of first candidate parcels, the second matching result corresponding to each of the plurality of second candidate parcels and a third selection condition, a plurality of target candidate parcels from the plurality of first candidate parcels and the plurality of second candidate parcels; and

acquiring, based on the plurality of target candidate parcels, target shipping label information of the parcel with missing shipping label.

2. The method for acquiring the shipping label information of the parcel with missing shipping label according to claim 1, before the acquiring the current picture and the current weight information of the parcel with missing shipping label in the current node, further comprising:

acquiring a historical picture and historical weight information for each of a plurality of historical parcels in all nodes;

calling the deep learning model to process each historical picture to obtain a historical depth feature of each of the plurality of historical parcels, and calling the classification model to process each historical picture to obtain a historical packaging material classification feature of each of the plurality of historical parcels, and obtaining, based on the historical depth feature and the historical packaging material classification feature of each of the plurality of historical parcels, a historical feature set of each of the plurality of historical parcels; and

storing each historical feature set into the feature library, and storing each historical weight information into the weight library.

3. The method for acquiring the shipping label information of the parcel with missing shipping label according to claim 2, wherein the storing each historical feature set into the feature library, comprises:

acquiring a historical shipping label number for each of the plurality of historical parcels, and establishing a correspondence table between each historical shipping label number and each historical feature set; and

storing each historical feature set and the correspondence table into the feature library.

4. The method for acquiring the shipping label information of the parcel with missing shipping label according to according to any one of claims 1 to 3, wherein the matching the current feature set with each candidate feature set to obtain the first matching result, and determining, based on the first matching result and the first selection condition, the plurality of first candidate parcels from the plurality of initial candidate parcels, comprises:

matching the current feature set with N candidate feature sets to obtain N feature similarities, wherein N is a positive integer;

obtaining, based on each feature similarity, a first feature quantization value for each of the plurality of initial candidate parcels; and

selecting, based on descending order of N first feature quantization values, top Q initial candidate parcels as the plurality of first candidate parcels, wherein Q is a positive integer.

5. The method for acquiring the shipping label information of the parcel with missing shipping label according to any one of claims 1 to 3, wherein M current pictures with different angles of the parcel with missing shipping label are provided, and each current picture corresponds to a current feature set;

wherein the matching the current feature set with each candidate feature set to obtain the first matching result, and determining, based on the first matching result and the first selection condition, the plurality of first candidate parcels from the plurality of initial candidate parcels, comprises:

respectively matching each current feature set with N candidate feature sets to obtain M feature similarity sets, wherein each feature similarity set comprises N feature similarities, N is a positive integer, and M is an integer greater than 1;

obtaining, based on N feature similarities in each feature similarity set, second feature quantization values of N initial candidate parcels corresponding to each current picture;

selecting, for N initial candidate parcels corresponding to each current picture, top P initial candidate parcels as third candidate parcels based on descending order of N second feature quantization values, wherein P is a positive integer;

obtaining, based on M second feature quantization values of each third candidate parcel and M current pictures, a first feature quantization value of each third candidate parcel; and

selecting top Q third candidate parcels as the plurality of first candidate parcels based on descending order of M*P first feature quantization values, wherein Q is a positive integer.

6. The method for acquiring the shipping label information of the parcel with missing shipping label according to claim 4 or 5, wherein the matching the current weight information with each candidate weight information to obtain the second matching result, and determining, based on the second matching result and the second selection condition, the plurality of second candidate parcels from the plurality of initial candidate parcel, comprises:

matching the current weight information with N candidate weight information to obtain N weight difference degrees, wherein N is a positive integer;

obtaining, based on each weight difference degree, a weight quantization value of each of the plurality of initial candidate parcels; and

selecting top W initial candidate parcels as the plurality of second candidate parcels based on descending order of N weight quantization values, wherein W is a positive integer.

7. The method for acquiring the shipping label information of the parcel with missing shipping label according to claim 6, wherein the determining, based on the first matching result corresponding to each of the plurality of first candidate parcels, the second matching result corresponding to each of the plurality of second candidate parcels and a third selection condition, the plurality of target candidate parcels from the plurality of first candidate parcels and the plurality of second candidate parcels, comprises:

selecting top S first candidate parcels as first target candidate parcels based on descending order of Q first feature quantization values for Q first candidate parcels, and determining top T second candidate parcels as second target candidate parcels based on descending order of W weight quantization values for W second candidate parcels, and determining remaining first candidate parcels and remaining second candidate parcels as remaining candidate parcels, wherein S and T are positive integers;

combining S first target candidate parcels and T second target candidate parcels, and performing deduplication to a combination of S first target candidate parcels and T second target candidate parcels to obtain A third target candidate parcels, wherein A is a positive integer;

obtaining, based on a first feature quantization value and a weight quantization value of each remaining candidate parcel, a total matched quantization value of each remaining candidate parcel;

selecting top B-A remaining candidate parcels as fourth target candidate parcels based on descending order of total matched quantization values of the remaining candidate parcels, wherein B is an integer; and

combining the A third target candidate parcels and the B-A fourth target candidate parcels to obtain B target candidate parcels.

8. An apparatus for acquiring shipping label information of a parcel with missing shipping label, comprising:

a first acquisition module, configured to acquire a current picture and current weight information of the parcel with missing shipping label in a current node;

a calling module, configured to call a deep learning model to process the current picture to obtain a current depth feature of the parcel with missing shipping label, and call a classification model to process the current picture to obtain a current packaging material classification feature of the parcel with missing shipping label, and obtain, based on the current depth feature and the current packaging material classification feature, a current feature set of the parcel with missing shipping label;

a first matching module, configured to acquire, from a feature library, a candidate feature set for each of a plurality of initial candidate parcels in an upstream node, match the current feature set with each candidate feature set to obtain a first matching result, and determine, based on the first matching result and a first selection condition, a plurality of first candidate parcels from the plurality of initial candidate parcels;

a second matching module, configured to acquire, from a weight library, candidate weight information for each of the plurality of initial candidate parcels in the upstream node, match the current weight information with each candidate weight information to obtain a second matching result, and determine, based on the second matching result and a second selection condition, a plurality of second candidate parcels from the plurality of initial candidate parcels; a determining module, configured to determine, based on the first matching result corresponding to each of the plurality of first candidate parcels, the second matching result corresponding to each of the plurality of second candidate parcels and a third selection condition, a plurality of target candidate parcels from the plurality of first candidate parcels and the plurality of second candidate parcels; and a second acquisition module, configured to acquire, based on the plurality of target candidate parcels, target shipping label information of the parcel with missing shipping label.

9. The apparatus for acquiring the shipping label information of the parcel with missing shipping label according to claim 8, further comprising:

a third acquisition module, configured to acquire a historical picture and historical weight information for each of a plurality of historical parcels in all nodes; a second calling module, configured to call the deep learning model to process each historical picture to obtain a historical depth feature of each of the plurality of historical parcel, and call the classification model to process each historical picture to obtain a historical packaging material classification feature of each of the plurality of historical parcels, and obtain, based on the historical depth feature and the historical packaging material classification feature of each of the plurality of historical parcels, a historical feature set of each of the plurality of historical parcels; and a storage module, configured to store each historical feature set into the feature library, and storing each historical weight information into the weight library.

10. The apparatus for acquiring the shipping label information of the parcel with missing shipping label according to claim 8 or 9, wherein the first matching module comprises:

a first matching sub-module, configured to match the current feature set with N candidate feature sets to obtain N feature similarities, wherein N is a positive integer; a first obtaining sub-module, configured to obtain, based on each feature similarity, a first feature quantization value for each of the plurality of initial candidate parcels; and

a first selecting sub-module, configured to select, based on descending order of N first feature quantization values, top Q initial candidate parcels as the plurality of first candidate parcels, wherein Q is a positive integer.

11. The apparatus for acquiring the shipping label information of the parcel with missing shipping label according to claim 8 or 9, wherein the first matching module further comprises:

a second matching sub-module, configured to respectively match each current feature set with N candidate feature sets to obtain M feature similarity sets, wherein each feature similarity set comprises N feature similarities, N is a positive integer, and M is an integer greater than 1; a second obtaining sub-module, configured to obtain, based on N feature similarities in each feature similarity set, second feature quantization values of N initial candidate parcels corresponding to each current picture; a second selecting sub-module, configured to select, for N initial candidate parcels corresponding to each current picture, top P initial candidate parcels as third candidate parcels based on descending order of N second feature quantization values, wherein P is a positive integer; a third obtaining sub-module, configured to obtain, based on M second feature quantization values of each third candidate parcel and M current pictures, a first feature quantization value of each third candidate parcel; and a third selecting sub-module, configured to select top Q third candidate parcels as the plurality of first candidate parcels based on descending order of M*P first feature quantization values, wherein Q is a positive integer.

12. The apparatus for acquiring the shipping label information of the parcel with missing shipping label according to claim 10 or 11, wherein the second matching module comprises:

a third matching sub-module, configured to match the current weight information with N candidate weight information to obtain N weight difference degrees, wherein N is a positive integer; a fourth obtaining sub-module, configured to obtain, based on each weight difference degree, a weight quantization value of each of the plurality of initial candidate parcels; and a fourth selecting sub-module, configured to select top W initial candidate parcels as the plurality of second candidate parcels based on descending order of N weight quantization values, wherein W is a positive integer.

13. The apparatus for acquiring the shipping label information of the parcel with missing shipping label according to claim 12, wherein the determining module comprises:

a fifth selecting sub-module, configured to select top S first candidate parcels as first target candidate parcels based on descending order of Q first feature quantization values for Q first candidate parcels, and determine top T second candidate parcels as second target candidate parcels based on descending order of W weight quantization values for W second candidate parcels, and determine remaining first candidate parcels and remaining second candidate parcels as remaining candidate parcels, wherein S and T are positive integers;

a fifth obtaining sub-module, configured to combine S first target candidate parcels and T second target candidate parcels, and performing deduplication to a combination of S first target candidate parcels and T second target candidate parcels to obtain A third target candidate parcels, wherein A is a positive integer;

a sixth obtaining sub-module, configured to obtain, based on a first feature quantization value and a weight quantization value of each remaining candidate parcel, a total matched quantization value of each remaining candidate parcel;

a sixth selecting sub-module, configured to select top B remaining candidate parcels as fourth target candidate parcels based on descending order of total matched quantization values of the remaining candidate parcels, wherein B is an integer; and

a seventh obtaining sub-module, configured to combine all of the third target candidate parcels and all of the fourth target candidate parcels to obtain a plurality of target candidate parcels.

14. An electronic device, comprising a memory and a processor, wherein the memory stores an application program, and the processor is configured to run the application program in the memory to execute steps in the method for acquiring the shipping label information of the parcel with missing shipping label according to any one of claims 1 to 7.

15. A computer-readable storage medium, wherein a computer program is stored on the computer-readable storage medium, and the computer program is executed by a processor to realize steps in the method for acquiring the shipping label information of the parcel with missing shipping label according to any one of claims 1 to 7.

FIG. 1

Acquiring a current picture and current weight information of the waybill-free package in a current node — S1

Calling a deep learning model to process the current picture to obtain a current depth feature of the waybill-free package, and calling a classification model to process the current picture to obtain a current packaging material classification feature of the waybill-free package, and obtaining, based on the current depth feature and the current packaging material classification feature, a current feature set of the waybill-free package — S2

Acquiring, from a feature library, a candidate feature set for each of a plurality of initial candidate packages in an upstream node, matching the current feature set with each candidate feature set to obtain a first matching result, and determining, based on the first matching result and a first selection condition, a plurality of first candidate packages from the plurality of initial candidate packages — S3

Acquiring, from a weight library, candidate weight information for each of the plurality of initial candidate packages in the upstream node, matching the current weight information with each candidate weight information to obtain a second matching result, and determining, based on the second matching result and a second selection condition, a plurality of second candidate packages from the plurality of initial candidate packages — S4

Determining, based on the first matching result corresponding to each of the plurality of first candidate packages, the second matching result corresponding to each of the plurality of second candidate packages and a third selection condition, a plurality of target candidate packages from the plurality of first candidate packages and the plurality of second candidate packages — S5

Acquiring, based on the plurality of target candidate packages, target waybill information of the waybill-free package — S6

FIG. 2

Feature
library

Initial candidate
picture in
upstream node

Feature extraction
+
Packaging
material classification

Put in
storage

Query

First candidate
package

Picture of
waybill-free
package in
current node

Detection

Feature
extraction
+
Packaging
material
classification

Feature query

FIG. 3

| 1 – 10 first candidate packages | 11 – 50 first candidate packages | | 1 - 10 second candidate packages | 11 - 50 second candidate packages |

Combined to perform deduplication

Order of total matched quantization value

| 15 third candidate packages | 35 fourth candidate packages |

| 50 target candidate packages |

FIG. 4

| 10 | 20 | 30 | 40 | 50 | 60 |
|---|---|---|---|---|---|
| First acquisition module | First calling module | First matching module | Second matching module | Determining module | Second acquisition module |

FIG. 5

101 — RF circuit

WiFi module ～ 107

108 —

109 — Power supply

Processor

Audio circuit ～ 106

102 — Memory

Sensor ～ 105

103 — Input unit

Display unit ～ 104

FIG. 6

## INTERNATIONAL SEARCH REPORT

| International application No. |
|---|
| **PCT/CN2023/131039** |

| A. | CLASSIFICATION OF SUBJECT MATTER |
|---|---|

G06Q 10/083(2024.01)i

According to International Patent Classification (IPC) or to both national classification and IPC

| B. | FIELDS SEARCHED |
|---|---|

Minimum documentation searched (classification system followed by classification symbols)

IPC:G06Q

Documentation searched other than minimum documentation to the extent that such documents are included in the fields searched

Electronic data base consulted during the international search (name of data base and, where practicable, search terms used)

CNABS; CNTXT; VEN; USTXT; WOTXT; EPTXT; CNKI; IEEE: 运单, 快递单, 脱落, 破损, 图像, 图片, 重量, 匹配, waybill, express bill, fall off, disrepair, image, picture, weight, matching

| C. | DOCUMENTS CONSIDERED TO BE RELEVANT |
|---|---|

| Category* | Citation of document, with indication, where appropriate, of the relevant passages | Relevant to claim No. |
|---|---|---|
| A | CN 110263194 A (YTO EXPRESS CO., LTD.) 20 September 2019 (2019-09-20) description, paragraphs 29-44 | 1-15 |
| A | CN 110826946 A (UC LOGISTICS CO., LTD.) 21 February 2020 (2020-02-21) description, paragraphs 43-74 | 1-15 |
| A | CN 113657504 A (SHANGHAI DONGPU INFORMATION TECHNOLOGY CO., LTD.) 16 November 2021 (2021-11-16) entire document | 1-15 |
| A | CN 114971444 A (SF TECHNOLOGY CO., LTD.) 30 August 2022 (2022-08-30) entire document | 1-15 |
| A | KR 20220014520 A (POSCO ICT CO., LTD.) 07 February 2022 (2022-02-07) entire document | 1-15 |

☐ Further documents are listed in the continuation of Box C.    ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **25 February 2024** | **06 March 2024** |

| Name and mailing address of the ISA/CN | Authorized officer |
|---|---|
| **China National Intellectual Property Administration (ISA/ CN)** **China No. 6, Xitucheng Road, Jimenqiao, Haidian District, Beijing 100088** |  |
|  | Telephone No. |

Form PCT/ISA/210 (second sheet) (July 2022)

## INTERNATIONAL SEARCH REPORT
### Information on patent family members

International application No.

**PCT/CN2023/131039**

| Patent document cited in search report | | | Publication date (day/month/year) | Patent family member(s) | | | Publication date (day/month/year) |
|---|---|---|---|---|---|---|---|
| CN | 110263194 | A | 20 September 2019 | None | | | |
| CN | 110826946 | A | 21 February 2020 | CN | 110826946 | B | 07 June 2022 |
| CN | 113657504 | A | 16 November 2021 | None | | | |
| CN | 114971444 | A | 30 August 2022 | None | | | |
| KR | 20220014520 | A | 07 February 2022 | KR | 102385083 | B1 | 08 April 2022 |

Form PCT/ISA/210 (patent family annex) (July 2022)